# EUROPEAN PATENT APPLICATION

(11) **EP 1 722 593 A1**
(43) Date of publication of application: **15.11.2006**
(21) Application number: 05010511.3
(22) Date of filing: 13.05.2005
(51) Int. Cl.: H04R 1/10, H04M 1/05, H04M 1/725

(54) **Multifunction audio wireless transmission device and wireless earphone**

(71) Applicant: Partner Tech Corp., Shin Tien, Taipei (TW)
(72) Inventor: Yueh, Wen-Hsiang, Hsinchuang City Taipei Hsien (TW)
(74) Representative: Viering, Jentschura & Partner

(57) **Abstract**

A multifunction audio wireless transmission device and a wireless earphone are proposed. The multifunction audio wireless transmission device can be connected externally with or embedded in a mobile phone, and can also connect an external audio output device. The wireless earphone can receive broadcasts and be used as a handsfree mobile phone through circuit control. Bidirectional signal transmission between the multifunction audio wireless transmission device and the wireless earphone is accomplished by means of a wireless transmission unit. The wireless earphone has the functions of volume adjustment, frequency/broadcast selection, handsfree communication/music listening switching, and broadcast channel adjustment.

## Description

### BACKGROUND OF THE INVENTION

### 1. Field of the invention

The present invention relates to a multifunction audio wireless transmission device and a wireless earphone and, more particularly, to a multifunction audio wireless transmission device capable of connecting an external audio output device and to a wireless earphone capable of receiving broadcasts and being used as a handsfree set by means of circuit control.

### 2. Description of Related Art

A prior art mobile phone is generally held close to an ear by a hand for use. This will cause much inconvenience in use or may even bring about an accident when a user drives a car or rides a motorcycle. Moreover, a mobile phone in use will emit high-frequency EM waves of high power to cause damage to the human body. Therefore, handsfree mobile phones have been proposed. Handsfree mobile phones can generally be divided into the car-type and the personal-type. A car-type handsfree has a transmission line connected to a mobile phone and a power line plugged into the car lighter. A personal-type handsfree is generally a wired device. Although it can reduce the danger in driving, there is still inconvenience such as entanglement of wire or bad contact due to pull and drag of the wire in use. Moreover, because entanglement of the connection wire blocks some space of the gear shift lever, the user may erroneously touch the handsfree or even damage the mobile phone due to pull and drag of the wire.

Because the prior art handsfree mobile phone has inconvenience and drawbacks in practical use, wireless earphones have become available in the market. A mobile phone base matching the wireless earphone is usually disposed on the mobile phone. The wireless earphone is hung on an ear of a user. Although wireless transmission can solve the problems of entanglement of wire and harm to the human brain due to high-frequency EM waves, there is still no wireless earphone integrating the functions of handsfree mobile phone, music player, and broadcasting device.

### SUMMARY OF THE INVENTION

One object of the present invention is to provide a multifunction audio wireless transmission device and a wireless earphone, which integrates the functions of a handsfree mobile phone, a music player, and a broadcasting device through a broadcaster, a speaker, and a plurality of push-on switches built in the circuit thereof.

To achieve the above object, the present invention proposes a multifunction audio wireless transmission device and a wireless earphone. The multifunction audio wireless transmission device comprises an audio transmission interface connected to the mobile phone to receive an audio signal output by the mobile phone, a signal processing unit connected to the audio transmission interface to receive and then process the audio signal, and a wireless transmission unit connected to the signal processing unit and the wireless earphone to send the processed audio signal to the remote wireless earphone and receive an answer signal output by the wireless earphone. Bidirectional audio transmission between the wireless earphone and the mobile phone is thus accomplished via the audio transmission interface and the wireless transmission unit.

The wireless earphone comprises a control and processing unit connected to a broadcaster, an output unit, a microphone, a wireless transmission unit and a push-on switch unit. The push-on switch unit outputs a control signal to the control and processing unit. The control and processing unit controls the wireless transmission unit to receive an audio signal output by the multifunction audio wireless transmission device. The control and processing unit processes the audio signal and then sends the processed audio signal to the output unit. A user can utilize the microphone to input voice messages, which are processed by the control and processing unit and then sent to the multifunction audio wireless transmission device via the wireless transmission unit. Bidirectional audio transmission between the wireless earphone and the multifunction audio wireless transmission device is thus accomplished via the wireless transmission unit.

The push-on switch unit outputs the control signal to the control and processing unit to control the broadcaster, which outputs a broadcast signal. The broadcast signal is a stereo sound signal. The broadcast signal is output to the output unit. The output unit receives the broadcast signal and then converts the broadcast signal to an output sound signal. The wireless earphone can thus control the broadcast function of the broadcaster.

### BRIEF DESCRIPTION OF THE DRAWINGS

The various objects and advantages of the present invention will be more readily understood from the following detailed description when read in conjunction with the appended drawing, in which:
Fig. 1 is a connection architecture diagram of the present invention;
Fig. 2 is a circuit block diagram of a multifunction audio wireless transmission device of the present invention;
Fig. 3 is a detailed circuit block diagram of a multifunction audio wireless transmission device of the present invention;
Fig. 4 is a circuit block diagram of a wireless earphone of the present invention; and
Fig. 5 is a detailed circuit block diagram of a wireless earphone of the present invention.

### DETAILED DESCRIPTION OF THE PREFERRED EMBODIMENTS

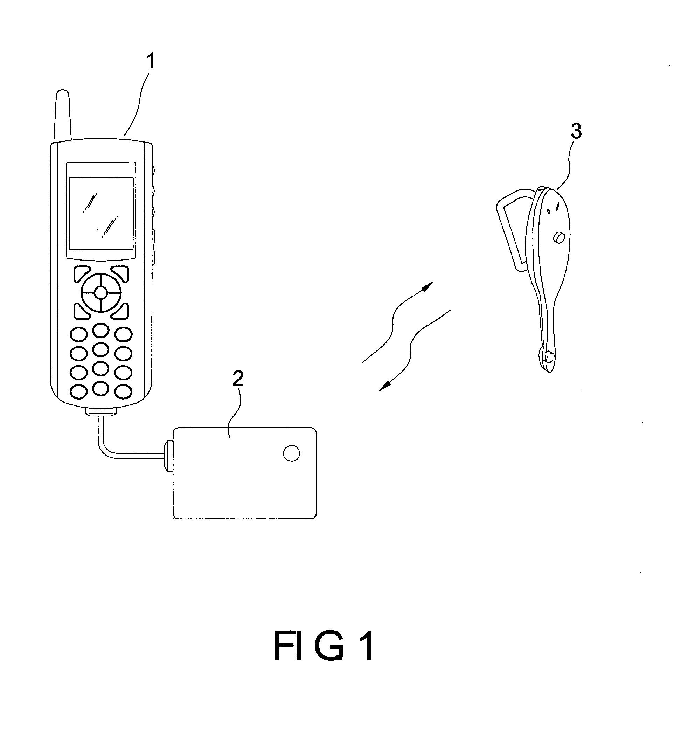

As shown in Fig. 1, the present invention makes use of a multifunction audio wireless transmission device 2 to connect a mobile phone 1. A wireless earphone 3 is matched for use. The multifunction audio wireless transmission device 2 can be connected externally or embedded in the mobile phone 1 (not shown). The wireless earphone 3 is hung on a single ear or both ears of a user. The wireless transmission device 2 and the wireless earphone 3 communicate with each other by means of wireless transmission.

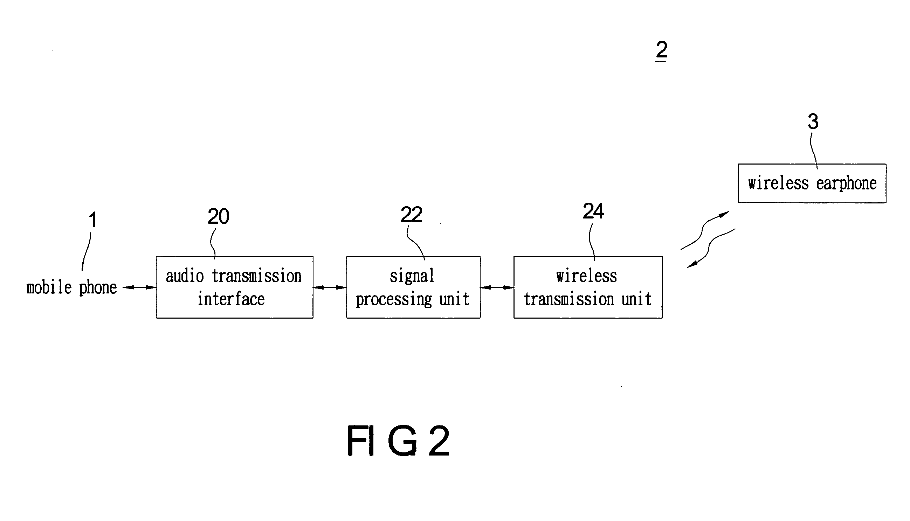

As shown in Fig. 2, the multifunction audio wireless transmission device 2 comprises an audio transmission interface 20, a signal processing unit 22 and a wireless transmission unit 24. The multifunction audio wireless transmission device 2 is connected to the mobile phone 1 via the audio transmission interface 20 to receive an audio signal output by the mobile phone 1. The audio transmission interface 20 sends the received audio signal to the signal processing unit 22 connected to the audio transmission interface 20 for processing. The signal processing unit 22 sends the processed audio signal to the remote wireless earphone 3 via the wireless transmission unit 24. The wireless transmission unit 24 can also receive an answer signal output by the wireless earphone 3. The answer signal will be sent to the signal processing unit 22 for processing. The processed answer signal is sent to the mobile phone 1 via the audio transmission interface 20. The multifunction audio wireless transmission device 2 can thus perform bidirectional audio transmission between the wireless earphone 3 and the mobile phone 1 through the audio transmission interface 20, the wireless transmission unit 24 and the signal processing unit 22.

The audio transmission interface 20 is connected externally with an audio output device to get a sound signal. The sound signal is processed by the signal processing unit 22 and transmitted by the wireless transmission unit 24 to the wireless earphone 3. A user can listen to music played by the audio output device via the wireless earphone 3. The audio output device is a music playback device, and can be an MP3 player, a music CD player, or a television. The wireless transmission unit 24 is a bluetooth wireless module or a wireless emission module.

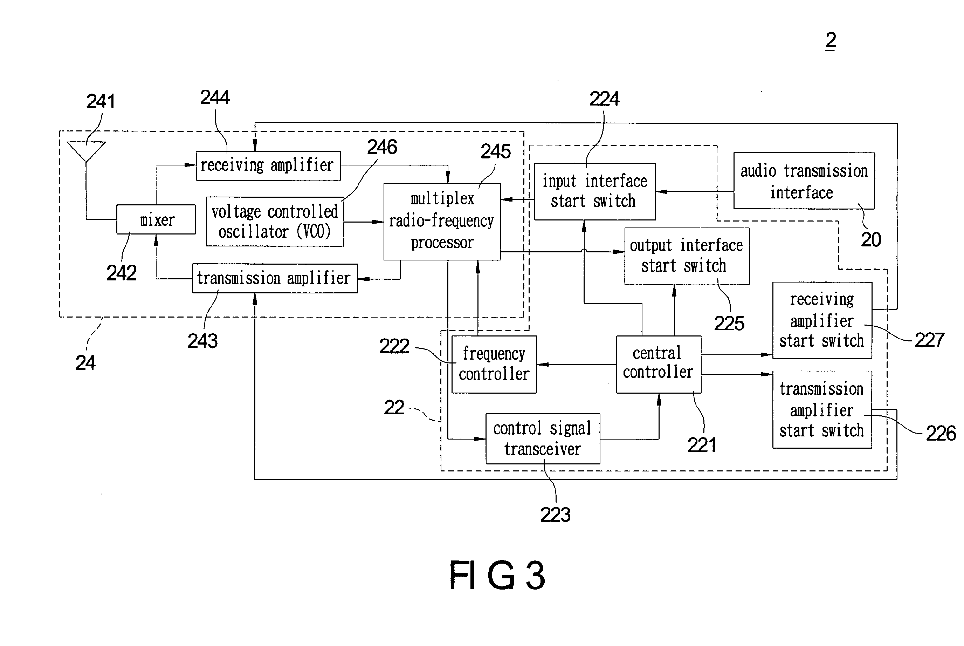

As shown in Fig. 3, the signal processing unit 22 is connected to the audio transmission interface 20, and is formed by connecting a central controller 221, a frequency controller 222, a control signal transceiver 223, an input interface start switch 224, an output interface start switch 225, a transmission amplifier start switch 226 and a receiving amplifier start switch 227. The signal processing unit 22 is the control center of the multifunction audio wireless transmission device 2.

The wireless transmission unit 24 is connected to the signal processing unit 22, and is formed by connecting an antenna 241, a mixer 242, a transmission amplifier 243, a receiving amplifier 244, a multiplex radio-frequency processor 245 and a voltage controlled oscillator (VCO) 246. The wireless transmission unit 24 is controlled by the signal processing unit 22 to perform bidirectional wireless transmission.

The audio signal input to the audio transmission interface 20 is processed and then sent to the wireless earphone 3 via the wireless transmission unit 24, or the answer signal from wireless earphone received by the wireless transmission unit 24 is processed and then sent to the mobile phone 1 via the audio transmission interface 20.

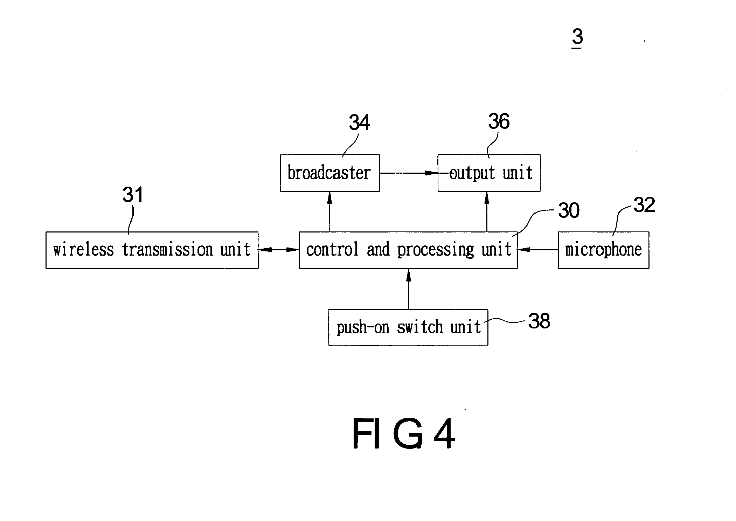

As shown in Fig. 4, the wireless earphone 3 comprises a control and processing unit 30, a wireless transmission unit 31, a microphone 32, a broadcaster 34, an output unit 36 and a push-on switch unit 38.

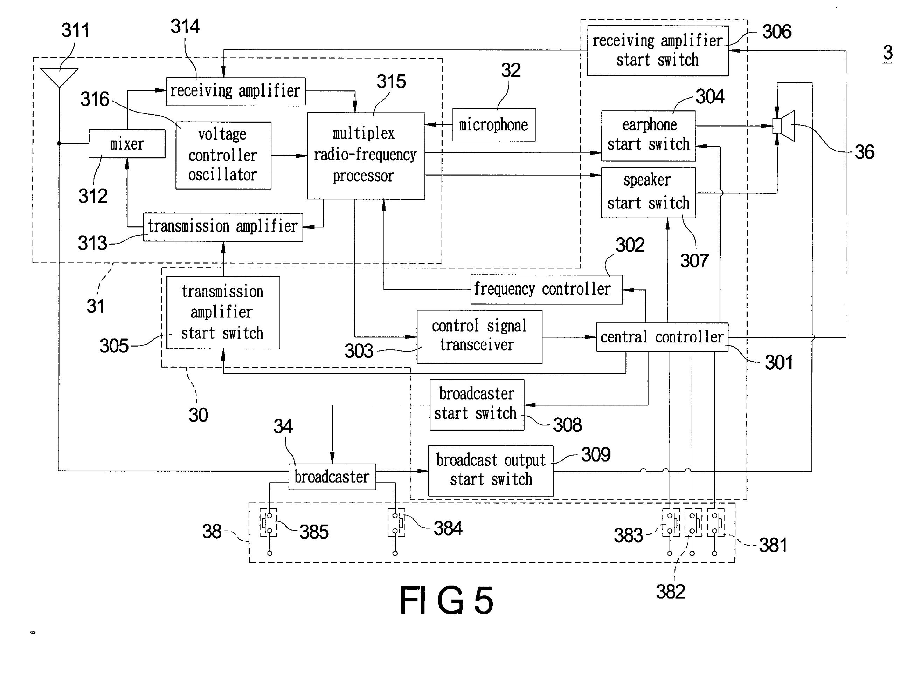

As shown in Fig. 5, the control and processing unit 30 is connected to the broadcaster 34 and the push-on switch unit 38. The control and processing unit 30 is formed by connecting a central controller 301, a frequency controller 302, a control signal transceiver 303, an earphone start switch 304, a transmission amplifier start switch 305, a receiving amplifier start switch 306, a speaker start switch 307, a broadcaster start switch 308 and a broadcast output start switch 309. The control and processing unit 30 is the control center of the wireless earphone 3.

The wireless transmission unit 31 is connected to the control and processing unit 30, and is formed by connecting an antenna 311, a mixer 312, a transmission amplifier 313, a receiving amplifier 314, a multiplex radio-frequency processor 315 and a voltage controlled oscillator (VCO) 316. The wireless transmission unit 31 is controlled by the control and processing unit 30 to perform wireless transmission.

The output unit 36 has the functions of a speaker and an earphone, and is connected to the control and processing unit 30. The output unit 36 is controlled by the control and processing unit 30 to send out the received signal from the wireless transmission unit 31. A user can communicate by the microphone 32. This audio signal is input to the wireless transmission unit 31 and processed and then wirelessly sent to the multifunction audio wireless transmission device 2. Or the signal from the multifunction audio wireless transmission device 2 is received by the wireless transmission unit 31 and processed and then sent out by the output unit 36 to respond to the user. The wireless earphone 3 can also be used as a handsfree, used for listening to music and broadcasts, or used for channel selection.

A user can output a control signal to the control and processing unit 30 by operating the push-on switch unit 38. The control and processing unit 30 controls actions of the wireless transmission unit 31, the broadcaster 34 and the output unit 36 connected thereto based on the control signal. The microphone 32 is connected to the control and processing unit 30 for sound source input of user. The input sound source is processed by the control and processing unit 30 and then sent to the remote multifunction audio wireless transmission device 2 via the wireless transmission unit 31.

The push-on switch unit 38 controls the control and processing unit 30 to perform a volume/handsfree switching function, a frequency/music switching function, a broadcast/wireless earphone switching function, a broadcast channel selection function and a broadcast type switching function.

When the control and processing unit 30 performs the volume/handsfree switching function, it is used to adjust the volume of the output unit 36. When a volume/handsfree-communication switch 381 is pressed for more than 3 seconds, a handsfree-communication function is switched to, and the wireless earphone is used as a handsfree mobile phone. When the volume/handsfree-communication switch 381 is pressed for more than 3 seconds again, the volume adjustment function is resumed. When the control and processing unit 30 performs the frequency/music switching function, if a frequency/music transfer switch 382 is pressed for less than 3 seconds, different receiving frequencies can be selected. If the frequency/music transfer switch 382 is pressed for more than 3 seconds, a music mode is switched to, and the user can listen to a CD, MP3 or television. When frequency/music transfer switch 382 is pressed for more than 3 seconds again, the frequency selection function is resumed.

When the control and processing unit 30 performs the broadcast/wireless earphone switching function, if a broadcast transfer switch 383 is not pressed yet, the wireless earphone is in an ordinary wireless earphone mode. If the broadcast transfer switch 383 is pressed for more than 3 seconds, a broadcast listening mode is switched to. If the broadcast transfer switch 383 is pressed for more than 3 seconds again, the wireless earphone mode is resumed. When the control and processing unit 30 performs the broadcast channel selection function, a channel selection switch 384 is used to select the broadcast channel. When the control and processing unit 30 performs the broadcast type switching function, a broadcast type transfer switch 385 is used to select the broadcast type such as FM, AM, SW1 and SW2.

A user can input a sound source via the microphone 32. The sound source is processed by the control and processing unit 30 and then sent to the remote multifunction audio wireless transmission device 2 via the wireless transmission unit 31 for bidirectional wireless transmission of voice. Moreover, the wireless earphone 3 can be used as a handsfree mobile phone, for listening to music and broadcasts, or for channel selection.

Reference is made to Fig. 5 as well as Fig. 3. The operation of the present invention is described below.
1. The multifunction audio wireless transmission device 2 is connected to the mobile phone 1, and the wireless earphone 3 is matched with the multifunction audio wireless transmission device 2 for use. When the mobile phone 1 has an incoming call, the incoming ringtone of the mobile phone 1 will be automatically sent to the multifunction audio wireless transmission device 2 for processing and the sent to the wireless earphone 3 to notify the user. When the user answers the incoming call, the multifunction audio wireless transmission device 2 will switch on the input interface start switch 224, the output interface start switch 225, the transmission amplifier start switch 226 and the receiving amplifier start switch 227 of the signal processing unit 22, and the wireless earphone 3 will switch on the earphone start switch 304, the transmission amplifier start switch 305 and the receiving amplifier start switch 306 and switch off the speaker start switch 307, the broadcaster start switch 308 and the broadcast output start switch 309 of the control and processing unit 30. Moreover, the wireless earphone 3 will automatically scan the best channel through the frequency controller 302 for use. Mutual transmission between the multifunction audio wireless transmission device 2 and the wireless earphone 3 can thus be accomplished.
2. The wireless earphone 3 is ordinarily used by a single person. But in a meeting, when driving a car, or for multi-person use, the wireless earphone 3 can support the function of a handsfree device. When the user presses the volume/handsfree-communication switch 381 of the push-on switch unit 38 for more than 3 seconds, the wireless earphone 3 will switch on the transmission amplifier start switch 305, the receiving amplifier start switch 306 and the speaker start switch 307 and switch off the earphone start switch 304, the broadcaster start switch 308 and the broadcast output start switch 309 of the control and processing unit 30. The output unit 36 can thus be used as a handsfree device for amplifying the voice.
3. When listening to analog signals of a CD, MP3 or television, the multifunction audio wireless transmission device 2 will switch on the input interface start switch 224 and the transmission amplifier start switch 226 and switch off the output interface start switch 225 and the receiving amplifier start switch 227 of the signal processing unit 22, and the wireless earphone 3 will switch on the earphone start switch 304 and the receiving amplifier start switch 306 and switch off the transmission amplifier start switch 305, the speaker start switch 307, the broadcaster start switch 308 and the broadcast output start switch 309 of the control and processing unit 30. The wireless earphone 3 can thus be used for listening to music.
4. The user can use the wireless earphone 3 as a radio set. When pressing the broadcast transfer switch 383 of the push-on switch unit 38 for more than 3 seconds, the wireless earphone 3 will switch on the broadcaster start switch 308 and the broadcast output start switch 309 and switch off the earphone start switch 304, the transmission amplifier start switch 305, the receiving amplifier start switch 306 and the speaker start switch 307 of the control and processing unit 30. The wireless earphone 3 can thus be used for listening to broadcasts. The user can press the broadcast type transfer switch 385 to select the broadcast type, such as FM, AM, SW1 or SW2. The user can also press the channel selection switch 384 to select the broadcast channel.

Although the present invention has been described with reference to the preferred embodiment thereof, it will be understood that the invention is not limited to the details thereof. Various substitutions and modifications have been suggested in the foregoing description, and other will occur to those of ordinary skill in the art. Therefore, all such substitutions and modifications are intended to be embraced within the scope of the invention as defined in the appended claims.

### Reference Numerals

### [Present invention]

1: mobile phone
2: multifunction audio wireless transmission device
20: audio transmission interface
22: signal processing unit
221: central controller
222: frequency controller
223: control signal transceiver
224: input interface start switch
225: output interface start switch
226: transmission amplifier start switch
227: receiving amplifier start switch
24: wireless transmission unit
241: antenna
242: mixer
243: transmission amplifier
244: receiving amplifier
245: multiplex radio-frequency processor
246: voltage controlled oscillator (VCO)
3: wireless earphone
30: control and processing unit
301: central controller
302: frequency controller
303: control signal transceiver
304: earphone start switch
305: transmission amplifier start switch
306: receiving amplifier start switch
307: speaker start switch
308: broadcaster start switch
309: broadcast output start switch
31: wireless transmission unit
311: antenna
312: mixer
313: transmission amplifier
314: receiving amplifier
315: multiplex radio-frequency processor
316: voltage controller oscillator
32: microphone
34: broadcaster
36: output unit
38: push-on switch unit
381: volume/handsfree-communication switch
382: frequency/music transfer switch
383: broadcast transfer switch
384: channel selection switch
385: broadcast type transfer switch

## Claims

1. A multifunction audio wireless transmission device connected externally with or embedded in a mobile phone and used to achieve bidirectional audio transmission with a wireless earphone, said multifunction audio wireless transmission device comprising:
an audio transmission interface connected to said mobile phone to receive an
audio signal output by said mobile phone;
a signal processing unit connected to said audio transmission interface to receive and then process said audio signal; and
a wireless transmission unit connected to said signal processing unit and said wireless earphone to send said processed audio signal to said remote wireless earphone and receive an answer signal output by said wireless earphone;
whereby said signal processing unit processes said answer signal and said audio signal, and bidirectional audio transmission between said wireless earphone and said mobile phone is accomplished via said audio transmission interface and said wireless transmission unit.

2. The multifunction audio wireless transmission device as claimed in claim 1, wherein said audio transmission interface can further be connected to an external audio output device to get a sound signal.

3. The multifunction audio wireless transmission device as claimed in claim 2, wherein said audio output device is a music playback device.

4. The multifunction audio wireless transmission device as claimed in claim 3, wherein said audio output device is an MP3 player, a music CD player, or a television.

5. The multifunction audio wireless transmission device as claimed in claim 1, wherein said wireless transmission unit is a bluetooth wireless module or a wireless emission module.

6. A multifunction wireless earphone for use with a remote multifunction audio wireless transmission device, said wireless earphone comprising:
a wireless transmission unit for receiving an audio signal output by said multifunction audio wireless transmission device;
a broadcaster capable of outputting a broadcast signal, said broadcast signal being a stereo sound signal;
an output unit connected to said broadcaster to receive said broadcast signal and convert said broadcast signal to an output sound signal;
a microphone used for signal receiving of said multifunction wireless earphone;
a push-on switch unit used to output a control signal; and
a control and processing unit connected to said broadcaster, said output unit, said microphone, said wireless transmission unit and said push-on switch and
used to receive said audio signal and said control signal;
whereby bidirectional audio transmission between said wireless earphone and said multifunction audio wireless transmission device is accomplished via said wireless transmission unit, and the broadcast function of said broadcaster is controlled.

7. The multifunction wireless earphone as claimed in claim 6, wherein said push-on switch unit controls said control and processing unit to perform a volume/handsfree switching function.

8. The multifunction wireless earphone as claimed in claim 6, wherein said push-on switch unit controls said control and processing unit to perform a frequency/music switching function.

9. The multifunction wireless earphone as claimed in claim 6, wherein said push-on switch unit controls said control and processing unit to perform a broadcast/wireless earphone switching function.

10. The multifunction wireless earphone as claimed in claim 6, wherein said push-on switch unit controls said control and processing unit to perform a broadcast channel selection function.

11. The multifunction wireless earphone as claimed in claim 6, wherein said push-on switch unit controls said control and processing unit to perform a broadcast type switching function.
